Europäisches Patentamt

European Patent Office

Office européen des brevets

(11) Publication number: **0 336 666**
**A2**

(12) # EUROPEAN PATENT APPLICATION

(21) Application number: **89303238.3**

(22) Date of filing: **03.04.89**

(51) Int. Cl.⁴: **B01J 13/02**

(30) Priority: **04.04.88 US 177244**
**24.02.89 US 315085**

(43) Date of publication of application:
**11.10.89 Bulletin 89/41**

(84) Designated Contracting States:
**AT BE CH DE ES FR GB GR IT LI LU NL SE**

(71) Applicant: **ICI AMERICAS INC.**
**Concord Pike & New Murphy Road**
**Wilmington Delaware 19897(US)**

(72) Inventor: **Rodson, Marius**
**611, Liberty Street Apartment 4**
**El Cerrito California 94530(US)**
Inventor: **Scher, Herbert Benson**
**1028 Wickham Drive**
**Moraga California, 94556(US)**

(74) Representative: **Downes, John Edward et al**
**Imperial Chemical Industries PLC Legal**
**Department: Patents Po Box 6**
**Welwyn Garden City Herts, AL7 1HD(GB)**

(54) **Polymerised substituted benzoid alkyl sulfonic acids and their salts as efficient protective colloids for microcapsulation systems.**

(57) This invention relates to the use of polymerized substituted benzoid alkyl sulfonic acids and their salts as protective colloids and oil-in-water emulsion stabilizers to prevent formation of an invert emulsion during encapsulation of water-insoluble materials wherein the encapsulating agent forming the microcapsule wall is an organic polyisocyanate which forms a polyurea capsule enclosure.

EP 0 336 666 A2

# POLYMERIZED SUBSTITUTED BENZOID ALKYL SULFONIC ACIDS AND THEIR SALTS AS EFFICIENT PROTECTIVE COLLOIDS FOR MICROCAPSULATION SYSTEMS

## A. Field of the Invention

This invention relates to an improved process for the production of microcapsules. More particularly, this invention relates to the use of polymerized substituted benzoid alkyl sulfonic acids and their salts as protective colloids during encapsulation of water-insoluble materials wherein the encapsulating agent forming the microcapsule wall is an organic polyisocyanate which forms a polyurea capsule enclosure.

## B. Description of the Prior Art

The use of membranes, coatings, and capsules for the controlled-release of liquid materials is well known in the art of both agricultural and non-agricultural chemicals. In agriculture, controlled-release techniques have improved the efficiency of herbicides, insecticides, fungicides, bactericides, and fertilizers. Non-agricultural uses include such materials as encapsulated dyes, inks, pharmaceuticals, flavoring agents, and fragrances.

The most common forms of controlled-release materials are coated droplets or microcapsules, coated solids including both porous and non-porous particles, and coated aggregates of solid particles. In some instances, a water-soluble encapsulating film is desired, which releases the encapsulated material when the capsule is placed in contact with water. Other coatings are designed to release the entrapped material when the coating is ruptured by external forces.

Still further coatings are porous in nature and release the entrapped material to the surrounding medium at a slow rate by diffusion through pores. In addition to providing controlled release, such coatings also serve to facilitate the dispersion of water-immiscible liquids into water and water-containing media, such as wet soil. Droplets encapsulated in this manner are particularly useful in agriculture, where water from irrigation, rain, and water sprays are frequently present. A variety of processes for producing such capsules is known.

The various encapsulat ion processes have been proposed for the purpose of satisfying certain functional, operational and economical aspects of production. As generally known, processes for producing microcapsules are phase separation processes, mechanical processes, and interfacial polymerization processes. Certain processing factors, such as oil-in-water emulsion formation, are important to obtain favorable microcapsules. Therefore, prevention of the formation of an invert emulsion, i.e., water-in-oil, is necessary.

It has been found as in the instant microencapsulation process that polymerized substituted benzoid alkyl sulfonic acids and their salts are superior to prior disclosed protective colloids taken alone or in combination, as disclosed in the particular system in which they are used.

## Summary of the Invention

It has now been found that the use of certain polymerized substituted benzoid alkyl sulfonic acids and their salts as protective colloids and oil-in-water emulsion stabilizers in microencapsulation processes provides improved processing and product formulation. Whether the microencapsulation process is based on phase separation or interfacial polymerization, the use of a protective colloid and an oil-in-water stabilizer is desirable and often necessary for a useable product.

Of special utility in this respect is the use of polymerized substituted benzoid alkyl sulfonic acids and their salts as protective colloids and oil-in-water stabilizers in the *in situ* polymerization processes wherein the capsule wall membrane is formed from the inside by interfacial polymerization of suitable monomers. In a microcapsule formulation prepared by an interfacial polymerization as disclosed in U.S. Pats. 4,066,741 and 4,140,516 whereby polyurea microcapules are prepared, the material to be encapsulated and at least one polyisocyanate are present in an organic phase, that is, the film-forming reactants are dissolved in hydrophobic liquid which is dispersed in water to form an oil-in-water emulsion. The reaction then occurs at the interface when the phases are placed in intimate contact as an emulsion. When heated, the reaction proceeds rapidly to completion.

The polyisocyanate present in the organic phase reacts with water to form an amine. This amine reacts with additional isocyanate monomers to form a polyurea capsule wall. Suitable monomers include aromatic polyisocyanates, aliphatic diisocyanate, high molecular weight linear aliphatic diisocyanates, isocyanate prepolymers and combinations thereof. For purposes of the present invention, it is preferred that the capsule wall be formed from polyisocyanates or a combination of polyisocyanates.

A surfactant and a protective colloid are present in an aqueous phase. The purpose of the surfactant is to lower the surface tension of the fluid interface when the aqueous phase is brought into contact with the organic phase. Examples of suitable surfactants include sodium isopropyl naphthalene sulfonate, polyoxyethylenesorbitol oleate laurate, ethoxylated nonylphenols and polyethylene glycol ethers of linear alcohols.

The protective colloid stabilizes the system against aggregation, flocculation and coalescence when the organic phase is dispersed into the aqueous phase. The present invention relates to an improved colloid for use in an interfacial polymerization system.

To form the microcapsule wall, the organic phase is dispersed into the aqueous phase. Reaction of the polyisocyanate with water to form an amine and subsequent reaction of this amine with additional isocyanate to form a polyurea wall is accomplished by appropriate adjustment of temperature and pH.

The present invention comprises the use of an improved protective colloid/oil-in-water emulsion stabilizer in the interfacial microencapsulation process. This improved protective colloid is selected from polymerized substituted benzoid alkyl sulfonic acids and their salts.

During the microencapsulation processing, difficulties often occur. As the encapsulation reaction proceeds, increased viscosity of the reaction dispersion may result. In many reactions, as in the formation of polyurea microcapsules from polyisocyanates and water, there is a substantial amount of gas formation and emission of the gas from the reaction dispersion. Oftentimes particle agglomeration will result during the processing, hence the use of an emulsion stabilizer, such as a protective colloid, is desirable and beneficial to the resulting formulation.

Another difficulty due to the high volumetric loading of the initial emulsion, which can be as high as 60 percent oil phase, there is a possibility that an inverted (water-in-oil) emulsion may form. Since such water-in-oil emulsions cannot be converted to oil-in-water type emulsions, the batch has to be treated to react out the isocyanate and disposed of as waste.

Accordingly, an object of the present invention is to provide a process for producing a microcapsule dispersion wherein encapsulation is carried out in the presence of polymerized substituted benzoid alkyl sulfonic acids and their salts as a protective colloid and oil-in-water emulsion stabilizer.

Another object of the present invention is to provide a process for producing a microcapsule dispersion in which the resulting viscosity is low.

Another object of the present invention is to provide a process for producing a microcapsule dispersion in which foaming during processing is minimized.

Another object of the present invention is to provide a process for producing a microcapsule dispersion which can be easily dispersed in hard water.

Another object of the present invention is to provide a process for producing a microcapsule dispersion in which heat is transferred in processing as efficiently as possible.

Another object of the present invention is to provide a microcapsule dispersion in which higher loading of core materials, such as active ingredients, solvents and the like, are possible.

Another object of the present invention is to prevent the formation of an invert water-in-oil emulsion.

These objects and others have been attained by an improved process for producing microcapsule dispersions wherein polymerized substituted benzoid alkyl sulfonic acids and their salts are used as a protective colloid and oil-in-water stabilizer in the encapsulation process and system. Further, according to the present invention, a microcapsule formulation having a high loading, i. e., high microcapsule concentration, can be obtained.

From a processing standpoint, the addition of a protective colloid which does more than stabilize the dispersed emulsion system against aggregation, flocculation and coalescence is beneficial and desirable. Ideally a protective colloid which will also stabilize the desired oil-in-water emulsion is useful and necessary. Many materials are known to function as protective colloids and are available commercially, including polyvinyl alcohols, alginates, alpha- and gamma-protein, casein, methyl cellulose, carboxymethyl cellulose, gelatin, glues, natural gums, polycids, and starch. Additional compounds which serve as protective colloids are the salts of lignin sulfonate, such as the sodium, potassium, magnesium, calcium and ammonium salts. Among commercial lignin sulfonates are Treax®, LTS, LTK and LTM, respectively, the potassium, magnesium and sodium salts of lignosulfonate (50% aqueous solutions), Scott Paper Co., Forest Chemical Products; Marasperse CR and Marasperse CBOS-3, sodium lignosulfonate, American Can Co.; Polyfon O®, Polyfon T®, REAX 88B®, REAX 85B®, sodium salts of lignin sulfonate and REAX C-21, calcium salt of lignin sulfonate, Westvaco Polychemicals; Orzan A, the sodium and ammonium salts of lignosulfonate, ITT Rayonier, Inc.

The actual quantity of protective colloid is not critical and any amount which is effective in enhancing the stability of the emulsion, reducing the dispersion viscosity and reducing the tendency to foam during the off-gasing can be used. It is most convenient to use between about 0.1% w/w and 10.0% w/w in terms of the aqueous phase of the system.

Likewise, the droplet size and the microcapsule size are not critical to the present invention. For greatest utility and effect in the final product, the droplet size or microcapsule size will be in the range of about 0.5 microns to abut 100 microns in diameter. The emulsion in the microencapsulation reaction system is prepared by the use of any conventional high shear stirring device. Once the desired droplet size is attained, then mild agitation is generally sufficient to prevent droplet growth throughout the balance of the reaction and microcapsule formation process.

In processing, the protective colloid and oil-in-water emulsion stabilizer should be added to the aqueous phase prior to the formation of the emulsion.

Polymerized substituted benzoid alkyl sulfonic acids and their salts, such as DAXAD 23, are the preferred protective colloid/oil-in-water emulsion stabilizer in polyisocyanate-based microencapsulation systems. The use of polymerized substituted benzoid alkyl sulfonic acids and their salts in the formulation resulted in a "thinner" or less viscous dispersion. With the presence of the preferred protective colloid, the reaction dispersion did not support foam resulting from the evolution of carbon dioxide gas during formation of the polyurea microcapsules. No other foam control agent was needed. Also noted as a beneficial effect is the decrease in heat-up time in processing and initiation of the capsule formation. Under stress conditions, such as high loading, particle recombination is prevented. Also, under stress conditions which are favorable for the formation of an invert emulsion (water-in-oil), the formation of an invert emulsion is prevented.

The present invention is illustrated in detail with reference to examples, but it is understood that the present invention is not limited to the examples.

## EXAMPLES

An evaluation of performance of various protective colloids to demonstrate the improved results with polymerized substituted benzoid alkyl sulfonic acids and their salts is given in the examples that follow.

The protective colloids (1) [Gantrez AN119/Vinol 205] graft polymer of methylvinyl ether-maleic acid copolymer (Gantrez AN119) and polyvinyl alcohol (Vinol 205) (see U.S. Pats. 4,448,929 and 4,456,569); (2) Scriptset 700 -- styrene-maleic acid copolymer; and (3) DAXAD 23 obtained from W.R. Grace Co., Organic Chemicals Division, Lexington, Mass., defined as consisting of sodium salts of polymerized substituted benzoid alkyl sulfonic acids.

The polyurea microcapsule formulation of vernolate (S-propyl N,N-di-n-propylthiolcarbamate) herbicide with the herbicide antidote R-25788 (N,N-diallyl dichloroacetamide) was used in this example.

The composition of the formulation chosen for this evaluation and comparison is presented in Table 1.

TABLE 1

| Vernolate tech. | 49.56 wt.% |
|---|---|
| R-25788 tech. | 4.15 wt.% |
| Polyisocyanates* | 7.18 wt.% |
| Protective colloid | 0.78 wt.% |
| Tergitol 15-S-7** (surfactant) | 0.12 wt.% |
| Water | 38.21 wt.% |
| | 100.00 wt.% |

* Microcapsule wall is formed from polyisocyanates as described in U.S. Pats. 4,046,741 and 4,140,516.
** Tergitol 15-S-7 is a nonionic surfactant consisting of a polyethylene glycol ether of a linear alcohol -- Union Carbide Chemicals and Plastics Company, Nes York.

Processing of the reactants was in accordance with the emulsion formation, heating and addition of reactants as taught in U.S. Pats. 4,046,741 and 4,140,516. The results are summarized in Table 2.

In all three experiments described in Table 2, the same agitation speed and same outer reactor wall temperature were maintained and used. The reaction mixture of 0.5 gallon was contained in a 1.0 gallon reaction vessel. This was done to allow a sizeable head-space above the reaction mixture to contain the foam that was produced.

TABLE 2

| Protective Colloid Used in the Formulation | Results |
| --- | --- |
| (1) Gantrez AN119/Vinol 205 -- graft polymer of methylvinyl ether/maleic acid copolymer and polyvinyl alcohol. | Heat-up time to 50° C = 73 min. Intense foaming began after 35 min. of heating. 1.0 g of defoamer was needed to prevent foam from overflowing. |
| (2) Scriptset 700 -- sytrenemaleic acid copolymer | Heat-up time to 50° C = 30 min. Foaming began after 5 min. of heating and reached the top of the reactor vessel after 30 min. of heating. 0.6 g of defoamer was needed to control the foaming. |
| (3) DAXAD 23 -- sodium salts of polymerized substituted benzoid alkyl sulfonic acids. | Heat-up time to 50° C = 30 min. Slight foaming began after 60 min. of reaction time. Highest foam layer = approx. 0.5 inch. No defoamer was needed. |

## Conclusions and Observations

In the microcapsule system used, carbon dioxide is formed and escapes from the reactor when the polyisocyanates react with water. Normally the gas is allowed to escape from the reaction mixture into the atmosphere. Both protective colloid (1) and (2) act as foam stabilizers and require addition of a foam control agent to control the foam. If gas escape from the reactor is hindered and foam is produced, there is danger of the contents overflowing from the reactor. Whereas defoamer usually is helpful, it is not always fully effective. Extra head space must be left in the reactor to accommodate the excess foam in order to avoid possible spillover. Experiments (1) and (2) required 1.0 g and 0.6 g of defoamer, respectively, in order to control the foam produced. No foam control agent was required with (3).

Protective colloids (2) and (3) permitted shorter heat-up time from ambient temperature to the reaction temperature when compared to protective colloid (1). This difference is attributed to the increased viscosity of the formulation protected with protective colloid (1). The increased viscosity results in slower flow of the formulation along the heated reactor walls and therefore slower heat exchange between the reactor walls and the bulk of the formulation. This effect cannot be countered by increased rate of stirring or increased heat input through the reactor heat-ing jacket. Higher stirring rates are likely to cause coalescence of the emulsion due to excessive shear forces. Increased wall temperature causes local overheating of the formulation which results in the emulsion coalescence and caking on the reactor walls.

All the protective colloids provided sufficient protective effect when used in a typical microcapsule formulation. However, the formulation prepared with the polymerized substituted benzoid alkyl sulfonic acid salt was superior in processing, handling and stability. The formulation did not become viscous, heatup time was relatively short and foaming was at a minimum.

## Oil-in-Water Emulsion Stability

Two types of experiments were used in this investigation. The conditions used in these experiments where such as to maximize the probability for inversion (formation of water-in-oil emulsion):

A. The water phase was placed in a reactor equipped with a high speed stirrer located in the bottom part of the vessel. The oil phase was added to the reactor without stirring. The stirrer was switched on and set at 3600 rpm. After 5 minutes of stirring, a drop of the resulting emulsion was added to water, in a test tube. If the emulsion diluted in water, oil-in-water emulsion type was indicated. If the emulsion floated in water in the form of oil-like spherical drops, water-in-oil emulsion (phase inversion) was indicated.

B. This experiment differed from the one described above only in the order in which the phases were added to the reactor. In this case the oil phase was placed in the reactor first then the water phase was added followed by switching on the stirrer. The rest of the experiment followed the procedure described in part A.

The following ingredients were used in this experiment:

Dyfonate® is O-ethyl-S-phenyl-ethylphosphonodithioate (fonofos)

Racer® is 3-chloro-4-chloromethyl-1-[3-(trifluoromethyl)phenyl]-2-pyrrolidone (fluorochloridone)

EPTC is S-ethyl dipropylthiolcarbamate

R-25788 is N,N-diallyl-2,2-dichloroacetamide

The results of this experiment appear in Table 3.

TABLE 3

| Formulation | Protective Colloid | Experiment A | Experiment B |
|---|---|---|---|
| Fluorochloridone 25CS | Gantrez-Vinol graft | inverted | inverted |
| Fluorochloridone 25CS | DAXAD 23 | ok | ok |
| Microencapsulated (EPTC + R-25788) | Gantrez-Vinol graft | inverted | |
| Microencapsulated (EPTC + R-25788) | Daxad 23 | ok | |
| Fonofos 48FS | Gantrez-Vinol graft | inverted | |
| Fonofos 48FS | Daxad 23 | ok | |

Due to density differentials is Experiment A when both phases were combined, the microencapsulated (EPTC + R-25788) oil phase formed the upper layer while fluorochloridone and fonofos oil phases formed the lower layer.

*48FS = flowable for seed treatment; 480 grams a.i./liter

**25CS = capsule suspension; 250 grams a.i./liter

Conclusion and Observation

The results of this Example of oil-in-water emulsion stability indicate that under conditions where opportunities for inversion are maximized, Gantrez AN119/Vinol 205 graft protective colloid clearly favors creation of water-in-oil (phase inversion) emulsion while use of Daxad 23 as the protective colloids results in oil-in-water emulsion.

While the invention has been described in detail and with reference to specific embodiments thereof, it will be apparent to one skilled in the art that various changes and modifications can be made therein without departing from the spirit and scope thereof.

**Claims**

1. A process for producing improved microcapsule formulations comprising the addition of a protective colloid, polymerized substituted benzoid alkyl sulfonic acid or salts thereof, to the microencapsulation reaction system.

2. The process of Claim 1 wherein the microcapsule formulation contains a microcapsule with a polyurea wall.

3. The process of Claim 2 wherein the protective colloid is added to the aqueous phase of the microencapsulation system prior to emulsion formation.

4. The process of Claim 2 wherein the microcapsules have a microcapsule size between about 0.5 microns and about 100 microns and the amount of between about 0.1% w/w and about 10.0% w/w of the protective colloid in the aqueous phase.

5. In a process for producing microcapsules formulation with a protective colloid, wherein the improvement comprises adding at least one substituted benzoid alkyl sulfonic acid or salt thereof as said protective colloid.

6. In a microcapsule formulation containing an aqueous suspension of microcapsule and a protection colloid the improvement comprising addition of at least one substituted benzoid alkyl sulfonic acid or salt thereof as said protective colloid.

7. An improved microcapsule formulation comprising an aqueous suspension of microcapsules and a protective colloid comprising a polymerized substituted benzoid alkyl sulfonic acid or salts thereof.

8. The improved microcapsule formulation of Claim 7 wherein the microcapsules have polyurea walls.

9. The microcapsule formulation of Claim 8 wherein the protective colloid is present in the amount of from about 0.1% w/w to about 10.0% w/w in terms of the aqueous phase of the suspension.

10. In an interfacial polymerization process characterized by the steps of:
(a) combining a material to be encapsulated and at least one polyisocyanate in an organic phase;
(b) incorporating a surfactant and a protective colloid in an aqueous phase;
(c) dispersing the organic phase into the aqueous phase; and

7

(d) forming a polyurea microcapsule wall at the phase interface,
the improvement which comprises using as said protective colloid, polymerized substituted benzoid alkyl sulfonic acids and their salts.

11. In an interfacial polymerization process characterized by the steps of:
(a) combining a material to be encapsulated and at least one polyisocyanate in an organic phase;
(b) incorporating a surfactant and a protective colloid in an aqueous phase;
(c) dispersing the organic phase into the aqueous phase; and
(d) forming a polyurea microcapsule wall at the phase interface,
the improvement which comprises stabilizing the dispersion of the organic phase in the aqueous phase using the protective colloid, polymerized substituted benzoid alkyl sulfonic acid or salts thereof.

12. The process of Claim 2 wherein polymerized substituted benzoid alkyl sulfonic acid or a salt thereof is added to a microencapsulation reaction system to stabilize the oil-in-water emulsion.

13. The process of preventing the formation of an invert (water-in-oil) emulsion by adding to the system an oil-in-water emulsion stabilizing amount of polymerized substituted benzoid alkyl sulfonic acid or a salt thereof.

14. In the process of Claim 13 wherein the polymerized substituted benzoid alkyl sulfonic acid or salt thereof is added prior to formation of the emulsion.

15. The process of Claim 13 wherein the polymerized substituted benzoid alkyl sulfonic acid or salt thereof is present in an amount of from about 0.1% w/w to about 10.0% w/w in terms of the aqueous phase of the emulsion.